# DEMANDE DE BREVET EUROPEEN

(11) **EP 2 938 007 A1**
(43) Date de publication de la demande: **28.10.2015**
(21) Numéro de dépôt: 15164098.4
(22) Date de dépôt: 17.04.2015
(51) Int. Cl.: H04B 5/00

(54) **PROCÉDÉ DE GESTION D'UN ENSEMBLE D'OBJETS COMMUNICANTS PERMETTANT LA PROPAGATION D'UN SIGNAL, NOTAMMENT UNE CONSIGNE DE RÉVEIL, ENTRE LESDITS OBJETS**

(30) Priorité: 22.04.2014 FR 1453620
(71) Demandeur: COMMISSARIAT A L'ENERGIE ATOMIQUE ET AUX ENERGIES ALTERNATIVES, 75015 Paris (FR)
(72) Inventeur: Lionti, Rosolino, 38180 SEYSSINS (FR); Descharles, Melanie, 38100 GRENOBLE (FR); Lhermet, Hélène, 38240 MEYLAN (FR); Thomas, Thierry, 38760 VARCES ALLIERS ET RISSET (FR)
(74) Mandataire: Novaimo

(57) **Abrégé**

Le procédé de gestion d'un ensemble (100) d'objets communicants (101), répartis de telle sorte que chaque objet (101) de l'ensemble (100) est voisin d'au moins un autre objet (101) dudit ensemble (100) de sorte à former une paire d'objets voisins aptes à communiquer entre eux, comporte les étapes suivantes: une activation (E1) d'un objet initial (101 a) choisi parmi les objets (101) de l'ensemble (100) ; une propagation (E2), à partir de l'objet initial (101 a) activé, d'un signal à chacun des autres objets de l'ensemble configurée de telle sorte que chacun desdits autres objets de l'ensemble a reçu, au terme de l'étape de propagation (E2), au moins une fois ledit signal de la part d'au moins un objet voisin appartenant audit ensemble.

## Description

### Domaine technique de l'invention

L'invention concerne le domaine des communications entre objets, notamment entre objets stockés.

L'invention a pour objet plus particulièrement un procédé de gestion d'un ensemble d'objets communicants.

### État de la technique

Rechercher un objet dans un stock important d'objets peut être un casse tête. En ce sens, il a été développé des méthodes spécifiques de localisation d'objet(s) dans un ensemble d'objets.

L'approche la plus répandue pour radiolocaliser un objet dans un ensemble repose sur l'estimation de distances et nécessite la connaissance géographique préalable de points de référence. Les principales techniques de mesure associées sont la mesure d'atténuation de l'intensité d'une onde électromagnétique émise, la mesure du temps d'arrivée de ladite onde électromagnétique ou de la phase de l'onde électromagnétique reçue. Ces techniques sont peu précises du fait des divers phénomènes impactant la propagation des ondes électromagnétiques dans un environnement réel. En fonction du choix de la technologie de communication mise en oeuvre, l'énergie consommée pour localiser un objet peut s'avérer élevée.

Il est donc nécessaire d'élaborer une stratégie de communication entre objets permettant de pallier aux conséquences d'un environnement de propagation difficile pour les ondes électromagnétiques.

### Objet de l'invention

Le but de la présente invention est de proposer une solution qui remédie à tout ou partie des inconvénients listés ci-dessus.

On tend vers ce but grâce à un procédé de gestion d'un ensemble d'objets communicants répartis de telle sorte que chaque objet de l'ensemble est voisin d'au moins un autre objet dudit ensemble de sorte à former une paire d'objets voisins aptes à communiquer entre eux, ledit procédé comportant les étapes suivantes:
- une activation d'un objet initial choisi parmi les objets de l'ensemble,
- une propagation, à partir de l'objet initial activé, d'un signal à chacun des autres objets de l'ensemble configurée de telle sorte que chacun desdits autres objets de l'ensemble a reçu, au terme de l'étape de propagation, au moins une fois ledit signal de la part d'au moins un objet voisin appartenant audit ensemble.

Préférentiellement, l'ensemble d'objets est configuré de sorte à adopter une configuration de veille où tous les objets de l'ensemble sont dans un état passif et une configuration de réveil où tous les objets de l'ensemble sont dans un état actif, le passage de la configuration de veille à la configuration de réveil étant mis en oeuvre par l'étape de propagation, ledit signal propagé étant alors une consigne de réveil.

De préférence, chacun des objets de l'ensemble étant dans un état passif, le passage de l'état passif à l'état actif de l'objet initial est réalisé par l'étape d'activation provoquant l'alimentation électrique d'au moins un lecteur de l'objet initial et l'émission d'un champ électromagnétique par ledit au moins un lecteur en vue de transmettre la consigne de réveil à un objet voisin correspondant, et le passage de l'état passif à l'état actif de chacun des autres objets de l'ensemble est réalisé par une étape d'alimentation électrique d'une radio-étiquette dudit objet à l'état passif provoquée par un champ électromagnétique émis par un lecteur d'un objet voisin à l'état actif, ladite alimentation électrique de la radio-étiquette dudit objet à l'état passif provoquant :
- la création d'un lien de communication entre ledit lecteur de l'objet voisin à l'état actif et ladite radio-étiquette dudit objet à l'état passif,
- la transmission, via le lien de communication créé, de la consigne de réveil par ledit lecteur de l'objet voisin à l'état actif,
- la réception par ladite radio-étiquette dudit objet à l'état passif de ladite consigne de réveil provoquant la mise en oeuvre d'une étape d'alimentation électrique d'au moins un lecteur dudit objet à l'état passif, son passage à l'état actif, et l'émission par ledit au moins un lecteur alimenté d'un champ électromagnétique en vue de transmettre ladite consigne de réveil.

Selon une réalisation, chaque objet de l'ensemble comporte une pluralité d'éléments communicants, chaque paire d'objets voisins comportant deux objets capables de communiquer directement entre eux uniquement par l'intermédiaire d'un seul élément communicant de l'un des objets de la paire d'objets voisins et d'un seul élément communicant de l'autre des objets de la paire d'objets voisins, et l'étape de propagation dudit signal comporte une étape de communication directe du signal entre lesdits deux objets d'une même paire d'objets voisins.

Par exemple, chaque élément communicant comporte un lecteur et une radio-étiquette, l'étape d'alimentation électrique d'une radio-étiquette de l'un des éléments communicants d'un objet par un objet voisin provoquant, en cas de réception de la consigne de réveil par ladite radioétiquette alimentée, la mise en oeuvre de l'alimentation électrique de chacun des lecteurs des autres éléments communicants dudit objet.

Selon un perfectionnement, le procédé comporte une étape de génération d'un inventaire de voisinage des objets de l'ensemble à partir de données générées par chacun des objets de l'ensemble après réception dudit signal, ledit inventaire comportant pour chaque objet de l'ensemble une liste comprenant des informations relatives à chaque objet voisin dudit objet.

En outre, le procédé peut comporter une étape d'utilisation des données de l'inventaire de voisinage pour générer une cartographie de l'agencement spatial des objets de l'ensemble les uns par rapport aux autres.

En particulier, le procédé peut comporter une étape de génération, pour chaque objet de l'ensemble, d'un chemin de communication entre l'objet initial et ledit objet utilisant les capacités de communication dudit objet initial et/ou d'au moins un objet intermédiaire situé sur ledit chemin de communication.

Selon une mise en oeuvre, le procédé comporte une étape d'interrogation d'un objet choisi parmi l'ensemble, l'étape d'interrogation comprenant les étapes suivantes :
- une émission d'une requête d'interrogation à partir de l'objet initial, ladite requête émise se propageant sur le chemin de communication correspondant jusqu'à atteindre l'objet choisi,
- une réponse à la requête, ladite réponse étant émise par l'objet choisi et se propageant sur le chemin de communication correspondant jusqu'à l'objet initial.

L'étape de génération de l'inventaire peut comporter l'établissement par un premier objet de l'ensemble, notamment après avoir propagé le signal à chaque objet voisin, d'une liste comprenant des informations relatives à chaque objet voisin dudit premier objet.

L'étape de génération de l'inventaire peut aussi comporter une étape d'enrichissement de l'inventaire dans laquelle un deuxième objet transmet sa liste, comprenant des informations relatives à chaque objet voisin, audit premier objet, lesdits premier et deuxième objets étant voisins, ledit premier objet enrichissant l'inventaire en incluant sa propre liste d'objet voisins associée à son propre identifiant et la liste issue du deuxième objet associée à l'identifiant dudit deuxième objet. Alternativement, l'étape de génération de l'inventaire peut comporter une étape d'enrichissement de l'inventaire dans laquelle le premier objet transmet sa liste à un deuxième objet, le deuxième objet étant celui qui lui a transmis ledit signal.

L'invention est aussi relative à une installation de stockage comprenant un ensemble d'objets communicants répartis de telle sorte que chaque objet de l'ensemble d'objets est voisin d'au moins un autre objet dudit ensemble de sorte à former une paire d'objets voisins aptes à communiquer entre eux, ladite installation comprenant des éléments configurés de sorte à mettre en oeuvre le procédé de gestion tel que décrit.

L'invention est aussi relative à un objet communicant destiné à être stocké dans l'installation, ledit objet communicant comporte une pluralité d'éléments communicants disposés chacun sur des faces différentes de l'objet communicant, et chaque élément communicant est configuré de sorte à recevoir un signal et à le transmettre aux autres éléments communicants, lesdits autres éléments communicants étant configurés de sorte à propager, après réception dudit signal transmis, ledit signal reçu vers l'extérieur dudit objet communicant.

Préférentiellement, dans le cadre de l'objet communicant, chaque élément communicant comporte :
- un lecteur configuré de sorte à émettre un champ électromagnétique permettant l'alimentation sans fil d'une radio-étiquette d'un autre objet communicant et,
- une radio-étiquette configurée de sorte à être alimentée par un champ électromagnétique émis par un lecteur d'un autre objet communicant.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est un schéma représentant différentes étapes du procédé de gestion selon un mode d'exécution particulier de l'invention,
- la figure 2 illustre un ensemble d'objets,
- la figure 3 illustre en détail deux objets voisins,
- la figure 4 est un exemple particulier d'un diagramme d'état de chaque objet de l'ensemble d'objets.

### Description de modes préférentiels de l'invention

Le procédé décrit ci-après diffère de l'état de la technique en ce que chaque objet de l'ensemble d'objets est apte à former un relai de propagation d'un signal en direction de son objet voisin ou de chacun de ses objets voisins. En particulier, ledit signal propagé peut être une consigne de réveil. On comprend donc que le signal peut être compris comme un signe, une alerte, une annonce apte à transmettre une consigne, un ordre ou une commande. Autrement dit, le signal peut être une consigne de réveil transmise par un lien de communication, notamment radiofréquence, permettant aussi une alimentation électrique à distance d'une partie d'un élément de communication de l'objet voisin.

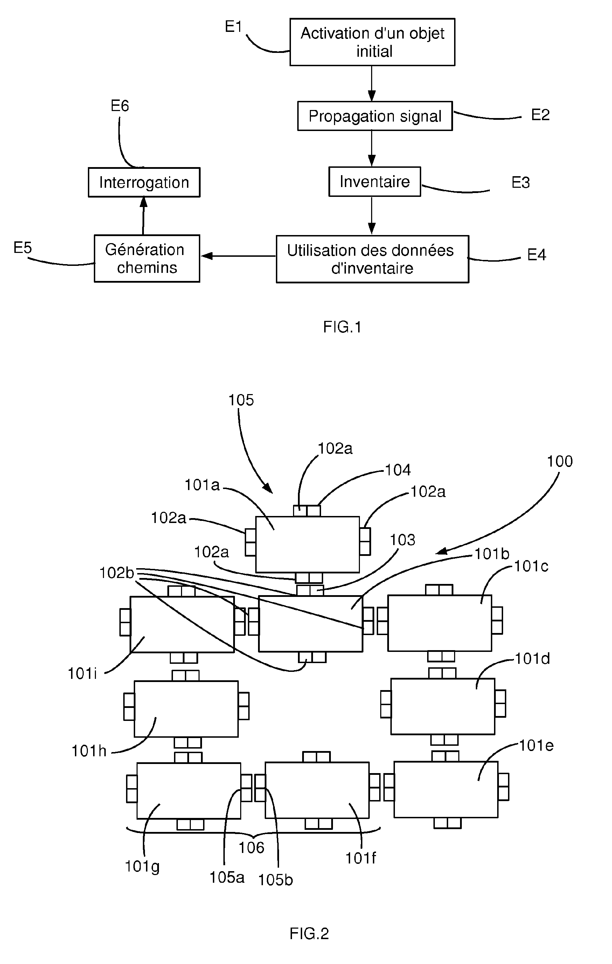

Comme illustré aux figures 1 et 2, le procédé de gestion permet de gérer un ensemble 100 d'objets communicants 101 (notés de a à i pour les besoins de la figure 2) répartis de telle sorte que chaque objet 101 de l'ensemble d'objets est voisin d'au moins un autre objet dudit ensemble 100 de sorte à former une paire d'objets voisins aptes à communiquer entre eux. Autrement dit, l'ensemble d'objets peut être vu comme une pluralité de paires d'objets voisins distincts. Un même objet de l'ensemble peut appartenir à plusieurs paires d'objets voisins différentes. Dans l'exemple de la figure 2, l'objet 101b a comme voisins les objets 101 a, 101c, 101i formant ainsi les trois paires d'objet (101b, 101a) ; (101b, 101c); (101b, 101i).

Par « objet voisin », on entend un objet adjacent d'un autre objet. Deux objets voisins sont adjacents l'un de l'autre. Autrement dit, un objet sera voisin d'un autre objet lorsqu'il est directement placé à côté d'un autre objet sans interposition d'un objet tiers et que ces deux objets voisins peuvent communiquer directement entre eux. Plus particulièrement, deux objets voisins peuvent établir un lien de communication sans fil direct entre eux, ce lien de communication permettant en particulier de transmettre le signal à propager.

Le procédé comporte une étape activation E1 d'un objet initial 101a choisi parmi les objets 101 de l'ensemble 100 d'objets. L'objet initial 101 a est généralement un objet accessible de l'ensemble d'objet, et donc situé à la périphérie extérieure de l'ensemble d'objets.

En outre, le procédé comporte une étape de propagation E2, à partir de l'objet initial 101a activé, d'un signal à chacun des autres objets de l'ensemble. Ladite étape de propagation E2 est configurée de telle sorte que chacun desdits autres objets de l'ensemble a reçu, au terme de l'étape de propagation E2, au moins une fois ledit signal de la part d'au moins un objet voisin appartenant audit ensemble. On comprend ici que la propagation peut être initiée par l'objet initial 101 a par transmission du signal à chaque objet voisin 101 b dudit objet initial 101 a (dans l'exemple de la figure 2, l'objet 101 a comporte un unique voisin constitué par l'objet 101b). A partir de là, chaque objet de l'ensemble ayant reçu le signal peut le transmettre à nouveau à au moins un voisin, et de préférence à chacun de ses voisins. Préférentiellement, chaque objet de l'ensemble ayant reçu le signal le transmet à chaque autre objet voisin de lui-même distinct de l'objet voisin par lequel il a reçu ledit signal. Dans l'exemple de la figure 2 l'objet 101 b transmet le signal, de sorte à ce qu'il soit propagé dans la boucle formée par les objets 101b, 101 c, 101 d, 101e, 101 f, 101g, 101 h et 101 i, à ses deux voisins 101 i et 101 c.

De préférence, chaque objet ne transmet qu'une seule fois le signal à ses voisins. C'est-à-dire que si un objet reçoit le même signal à partir de deux objets voisins différents, il ne le propagera qu'une seule fois à son ou ses autres objets voisins.

Il résulte de cette étape de propagation E2 que l'on est capable de s'adresser à n'importe quel objet de l'ensemble quel que soit l'environnement. Par exemple, même si l'objet est une caisse métallique recouverte d'autres caisses métalliques formant les autres objets de l'ensemble, la propagation d'objet en objet permettra d'accéder à toutes les caisses métalliques.

Afin d'éviter toute propagation erronée, l'activation de l'objet initial 101 a peut être réalisée par un échange authentifié entre ledit objet initial et un dispositif d'activation. Ainsi, l'objet initial 101a ne propagera pas le signal si le dispositif d'activation n'est pas jugé comme autorisé.

De préférence, pour éviter tout piratage, les communications entre deux objets voisins sont authentifiées et/ou cryptées.

On comprend de ce qui a été dit ci-dessus que chacun des objets 101 de l'ensemble 100 est équipé de moyens de communication 105. Il en résulte donc une problématique d'alimentation électrique des moyens de communication. En effet, si les moyens de communication, généralement alimentés chacun par une batterie autonome, restent toujours à l'écoute, il en résultera une décharge rapide et donc une nécessité de changer à intervalles régulier les batteries.

En ce sens, il a été développé une amélioration du procédé permettant de pallier à ce type de problème. Ainsi, l'ensemble d'objets 100 est avantageusement configuré de sorte à adopter une configuration de veille où tous les objets 101 de l'ensemble 100 sont dans un état passif et une configuration de réveil où tous les objets 101 de l'ensemble 100 sont dans un état actif, le passage de la configuration de veille à la configuration de réveil étant mis en oeuvre par l'étape de propagation E2, ledit signal propagé étant alors une consigne de réveil.

On comprend de ce qui a été dit ci-dessus que, dans un état passif, un objet consomme moins d'énergie électrique que dans un état actif. Préférentiellement, dans son état passif, tous les éléments consommateurs d'énergie sont éteints de manière à ne plus rien consommer. Autrement dit, en mode passif, la consommation électrique d'un objet est nulle. Préférentiellement, chaque objet 101 de l'ensemble 100 comporte une batterie fournissant de l'énergie électrique dans l'état actif, notamment à des moyens de communication dudit objet, et ne fournissant pas d'énergie électrique dans l'état passif. La batterie a été donnée ici à titre d'exemple, elle pourra être remplacée par tout type de source d'énergie.

Préférentiellement, l'étape d'activation E1 de l'objet initial 101 a comporte une étape d'alimentation électrique d'au moins un lecteur 102a de l'objet initial (notamment par la batterie de l'objet visée ci-dessus), ledit objet initial 101 a passant alors d'un état passif à un état actif, et une étape d'émission d'un champ électromagnétique par chaque lecteur 102a de l'objet initial de sorte à établir une communication radiofréquence en vue de transmettre le signal à propager en direction d'un objet voisin 101b dudit objet initial 101 a. Le champ électromagnétique émis par le lecteur 102a de l'objet initial provoque l'alimentation d'une radio-étiquette 104 (figure 2) dudit objet voisin créant ainsi un lien de communication et la transmission, via ledit lien de communication du signal à propager. La réception par la radio-étiquette du signal à propager déclenche l'alimentation électrique d'au moins un lecteur 102b de l'objet voisin 101 b, ledit objet voisin 101 b passant alors d'un état passif à un état actif et ainsi de suite.

Par « champ électromagnétique » on entend préférentiellement une onde électromagnétique.

Autrement dit, hors l'objet initial dont le passage de l'état passif à l'état actif peut être réalisé par le dispositif d'activation, chaque autre objet 101 de l'ensemble 100 est configuré de sorte à passer de l'état passif à l'état actif consécutivement à une étape de réception d'une consigne de réveil par une radio-étiquette dudit autre objet émise par un objet voisin. Chaque étape de réception d'une consigne de réveil est résultante de la propagation du signal entre deux objets voisins.

Ainsi, l'activation de l'objet initial 101a peut être réalisée par un lecteur extérieur à l'ensemble d'objets (formant le dispositif d'activation visé ci-dessus) et venant volontairement générer un champ électromagnétique alimentant électriquement une radio-étiquette 104 de l'objet initial et transmettre, via le lien de communication entre le lecteur extérieur et la radio étiquette alimentée de l'objet initial 101 a, le signal à propager de sorte à réveiller l'objet initial 101a et à mettre en oeuvre l'étape d'alimentation électrique dudit au moins un lecteur 102a de l'objet initial 101a.

Les notions de « lecteur » et de « radio-étiquette » sont ici à prendre au sens large comme assurant les fonctions générales de radio-identification par exemple de type RFID (de l'anglais « Radio Frequency Identification ») et notamment de type communication en champ proche ou NFC (de l'anglais « Near Field Communication). Ainsi, un lecteur peut être un dispositif apte à émettre des ondes radiofréquences, c'est-à-dire un champ électromagnétique, qui vont activer une radio-étiquette en lui fournissant à courte distance une énergie dont elle a besoin pour s'alimenter. La radio-étiquette est un dispositif comprenant généralement une puce et une antenne reliée à la puce, elle ne nécessite aucune source d'énergie en dehors de celle fournie par le lecteur au moment de l'interrogation (transmission du signal). La radio-identification décrite ci-avant peut être du type utilisée par des systèmes d'identification de personne à carte sans contact (par exemple systèmes aux normes ISO14443 et ISO15693 à la fréquence de 13.56MHz) et des systèmes d'identification d'objets à étiquette "RFID" (par exemple systèmes aux normes ISO15693 et ISO18000-3 à la fréquence de 13.56MHz et ISO18000-2 à une fréquence inférieure à 135kHz).

Selon une réalisation particulière, chacun des objets 101 de l'ensemble 100 étant dans un état passif, le passage de l'état passif à l'état actif de l'objet initial 101a est réalisé par l'étape d'activation E1 provoquant l'alimentation électrique d'au moins un lecteur 102a (de préférence de chaque lecteur) de l'objet initial 101a (notamment par une batterie de l'objet initial) et l'émission d'un champ électromagnétique par ledit au moins un (de préférence chaque) lecteur 102a en vue de transmettre la consigne de réveil à un objet voisin correspondant. Le passage de l'état passif à l'état actif de chacun des autres objets 101 de l'ensemble 100 est réalisé par une étape d'alimentation électrique d'une radio-étiquette dudit objet à l'état passif provoquée par un champ électromagnétique émis par un lecteur d'un objet voisin à l'état actif, ladite alimentation électrique de la radio-étiquette dudit objet à l'état passif provoquant :
- la création d'un lien de communication entre ledit lecteur de l'objet voisin à l'état actif et ladite radio-étiquette dudit objet à l'état passif,
- la transmission, via le lien de communication créé, de la consigne de réveil par ledit lecteur de l'objet voisin à l'état actif,
- la réception par la radio-étiquette dudit objet à l'état passif de ladite consigne de réveil provoquant la mise en oeuvre d'une étape d'alimentation électrique d'au moins (de préférence chaque) un lecteur dudit objet à l'état passif (notamment par une batterie dudit objet passif), son passage à l'état actif, et l'émission par ledit au moins un lecteur (de préférence chaque) alimenté d'un champ électromagnétique en vue de transmettre la consigne de réveil. Ici on peut distinguer l'alimentation électrique de la radio-étiquette qui est réalisée à distance (télé-alimentation) par le champ électromagnétique émis par l'objet voisin à l'état actif correspondant, de l'alimentation électrique du ou des lecteurs de l'objet qui est réalisée par une source d'alimentation (batterie) appartenant audit objet.

De préférence, lorsque ladite radio-étiquette dudit objet à l'état passif reçoit ladite consigne de réveil, ladite radio étiquette authentifie la consigne de réveil en vue de vérifier qu'il s'agit bien d'une consigne de réveil autorisée, si la consigne de réveil est authentifiée (c'est-à-dire autorisée), alors il est provoqué la mise en oeuvre de l'étape d'alimentation électrique d'au moins (de préférence chaque) un lecteur dudit objet à l'état passif (notamment par une batterie dudit objet passif), son passage à l'état actif, et l'émission par ledit au moins un lecteur (de préférence chaque) alimenté d'un champ électromagnétique en vue de transmettre la consigne de réveil. En particulier, si la consigne de réveil n'est pas authentifiée, (c'est-à-dire qu'elle n'est pas autorisée) alors la radio-étiquette ayant reçu ladite consigne de réveil ne la propage pas et ledit objet à l'état passif reste dans son état passif. En outre, l'étape d'activation peut aussi comporter une authentification dans le sens où si l'activation n'est pas authentifiée alors l'objet initial ne passe pas à l'état actif et si l'activation est authentifiée alors l'objet initial passe de l'état passif à l'état actif provoquant tout ce qui a été évoqué précédemment. De manière générale, le processus d'authentification ne sera pas décrit en détails ici, l'homme du métier pourra appliquer ici ses connaissances pour adapter l'authentification au procédé décrit.

L'authentification au sens de la présente description peut être prise au sens large et peut présenter différents niveaux. Dans un premier niveau, il peut être opéré une simple vérification que la consigne est bien une consigne de réveil (par exemple que le code traduisant la consigne de réveil corresponde bien au code de réveil défini pour le système et connu par le système). Dans un second niveau, il peut être opéré un contrôle de cette consigne de réveil pour vérifier qu'il ne s'agit pas d'un faux suite à des erreurs de transmission (par exemple, il est ajouté au code traduisant la consigne une valeur calculée suivant un procédé de calcul connu, dans les données transmises, c'est typiquement les « CRC » (pour « Cyclic Redundancy Check » aussi connu sous les termes français de « contrôle de redondance cyclique ») ajoutés en fin de trame de données pour vérifier que ces données ne soient pas corrompues au cours de la transmission). Dans un troisième niveau, on trouve une authentification qui est la plus « forte », à ce niveau, il est vérifié l'authenticité de la consigne de réveil (cela peut être réalisé par la vérification de l'identité de l'unité émettrice de la consigne, par exemple par un échange de certificat).

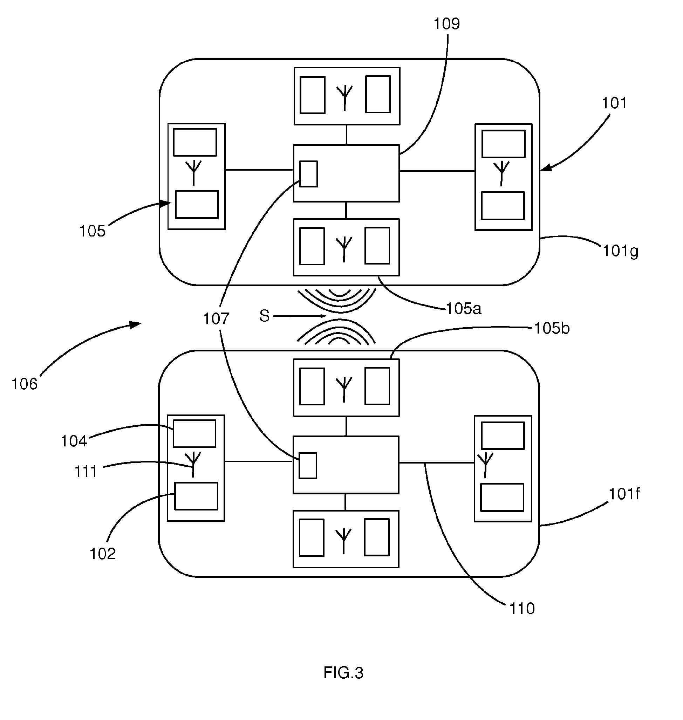

Il résulte de ce qui a été dit ci-avant que chacun des objets 101 de l'ensemble 100 est avantageusement équipé de moyens de communication adaptés. En particulier, comme illustré à la figure 3, chaque objet 101 de l'ensemble comporte une pluralité d'éléments communicants 105, chaque paire d'objets voisins 106 comportant deux objets capables de communiquer directement entre eux uniquement par l'intermédiaire d'un seul élément communicant 105a de l'un des objets 101 g de la paire d'objets voisins et d'un seul élément 105b communicant de l'autre des objets 101f de la paire d'objets voisins (figure 2), et l'étape de propagation E2 dudit signal comporte une étape de communication directe du signal S entre lesdits deux objets 101 f, 101 g d'une même paire 106 d'objets voisins.

On comprend qu'un même objet de l'ensemble, s'il a plusieurs voisins, sera apte à recevoir le signal à propager de chacun de ses voisins. Ceci permet au procédé une certaine robustesse même en cas de défaillance d'un élément communicant 105 du moment que l'objet est « vu » par au moins deux objets voisins.

Par ailleurs, un objet communicant 101 peut être tel qu'il comporte une redondance de chacun de ses éléments communicants 105. Ceci permet d'améliorer encore la robustesse du procédé.

En particulier, chaque élément communicant comporte (figure 3) un lecteur 102 et une radio-étiquette 104, l'étape d'alimentation électrique d'une radio-étiquette de l'un des éléments communicants d'un objet par un objet voisin (notamment par le lecteur correspondant dudit objet voisin) provoquant, en cas de réception de la consigne de réveil par ladite radio-étiquette alimentée, et le cas échéant uniquement si la consigne de réveil est authentifiée (c'est-à-dire considérée comme valide), la mise en oeuvre de l'alimentation électrique de chacun des lecteurs des autres éléments communicants dudit objet, notamment par la batterie 107 dudit objet. En particulier, une fois alimentés les lecteurs des autres éléments communicants transmettent ledit signal de la manière telle que décrite précédemment.

Sur la figure 3 qui illustre un exemple particulier des moyens de communication d'un objet, les moyens de communication d'un objet peuvent comporter une unité centrale 109 qui centralise l'intelligence de l'objet. Cette unité centrale 109 contient les fonctions principales pour résoudre le problème posé, et peut contenir aussi des fonctions applicatives telles que de l'enregistrement de données, du calcul, de l'actionnement, etc. L'unité centrale 109 dispose de la batterie 107 qu'elle utilise lorsque qu'une commande de réveil est activée par l'un des éléments communicants 105 notamment à réception d'une consigne de réveil par ledit élément communicant 105. Les éléments communicants 105 sont positionnés en surface de l'objet concerné, en des points précis dont l'emplacement est connu de l'unité centrale 109 (les positions sont relatives à l'objet correspondant). En outre, chaque objet comporte des liaisons 110, préférentiellement filaires, reliant l'unité centrale 109 aux éléments communicants 105. Les liaisons sont préférentiellement filaires de sorte à limiter l'énergie nécessaire à la transmission des données et à faciliter le réveil de l'objet concerné (passage de l'état passif à l'état actif). Les éléments communicants 105 sont, comme évoqué précédemment, munis de moyens de communication en champ proche de type NFC (Near Field Communication) permettant une fonction de réception de type "transponder sans alimentation" et une fonction "lecteur de transponders" alimenté par l'unité centrale 109 ou par une source électrique dédiée, assurant la communication et notamment la transmission de la consigne de réveil. La disposition des objets de l'ensemble entre eux est telle qu'au moins un élément communicant d'un objet est à portée de communication d'un élément communicant d'un autre objet de sorte à former la paire d'objets voisins évoquée précédemment.

De préférence, comme évoqué, chaque élément communicant 105 d'un objet donné est à portée de communication d'un unique autre élément communicant d'un objet voisin dudit objet donné. Selon le type de lecteur utilisé, il n'est pas impossible que le lecteur d'un élément communicant puisse voir plusieurs radios-étiquettes à la fois, dans ce cas, avant de propager le signal, notamment de réveil, le lecteur adapte son fonctionnement, notamment en adaptant le niveau de l'émission du champ électromagnétique, de sorte à ne plus voir qu'une seule radio-étiquette considérée alors comme appartenant à un objet voisin. Autrement dit, selon un mode d'exécution particulier, un lecteur peut être tel qu'il comporte une configuration dans laquelle il ne peut alimenter, via le champ électromagnétique qu'il émet, qu'une unique radio-étiquette.

Sur la figure 3, chaque élément communicant 105 peut comporter une liaison sans fil 111 additionnelle par exemple à la fréquence 868MHz pour permettre une communication avec des débits élevés avec un organe central de récupération de données extérieur à l'ensemble d'objets.

De manière plus générale, un objet communicant 101 destiné à être utilisé dans le cadre du procédé tel que décrit comporte une pluralité d'éléments communicants 105 disposés chacun sur des faces différentes de l'objet communicant. Chaque élément communicant 105 est configuré de sorte à recevoir le signal (le signal à propager) et à le transmettre aux autres éléments communicants 105 (dudit objet communicant), lesdits autres éléments communicants 105 étant configurés de sorte à propager, après réception dudit signal transmis, ledit signal reçu vers l'extérieur dudit objet communicant 101. Plus particulièrement, chaque élément communicant comporte un lecteur 102 configuré de sorte à émettre un champ électromagnétique permettant l'alimentation sans fil d'une radio-étiquette d'un autre objet communicant 105 et une radio-étiquette 104 configurée de sorte à être alimentée par un champ électromagnétique émis par un lecteur d'un autre objet communicant. La radio-étiquette étant en outre configurée de sorte que son alimentation électrique extérieure par le champ électromagnétique provoque, après réception du signal, une alimentation électrique d'un ou plusieurs lecteurs dudit objet par une batterie dudit objet de sorte à transmettre le signal reçu vers l'extérieur.

Dans certains cas d'utilisation, la disposition des objets 101 de l'ensemble les uns par rapport aux autres n'est pas connue. En ce sens, il existe un besoin de générer un inventaire des objets, notamment en vue de déterminer si l'ensemble d'objets contient un objet recherché et/ou la répartition spatiale des objets les uns par rapport aux autres.

En ce sens, le procédé peut avantageusement comporter une étape de génération d'un inventaire de voisinage E3 (figure 1) des objets 101 de l'ensemble à partir de données générées par chacun des objets 101 de l'ensemble 100 après réception dudit signal, ledit inventaire comportant pour chaque objet de l'ensemble une liste comprenant des informations relatives à chaque objet voisin dudit objet.

Par exemple, l'étape de génération de l'inventaire E3 comporte l'établissement par un premier objet de l'ensemble, notamment après avoir propagé le signal à chaque objet voisin (préférentiellement hors celui qui lui a transmis le signal), d'une liste comprenant des informations relatives à chaque objet voisin dudit premier objet. La liste comporte alors des informations relatives à un ou plusieurs objets voisins. Autrement dit, lorsque le premier objet a propagé le signal (de préférence la consigne de réveil) à chaque objet voisin, ce dernier est capable de savoir quel est son unique voisin ou quels sont tous ses voisins.

Bien que cela ne soit pas décrit en détails, chaque objet 101 de l'ensemble 100 est préférentiellement associé à un numéro d'identifiant qui lui est unique, et chaque élément communicant 105 d'un objet 101 est préférentiellement associé à un numéro d'ordre unique pour un même objet, ce, ou ces, numéro(s) peu(ven)t être lu(s) par un objet voisin. Ainsi, après propagation du signal, le premier objet peut lire l'identifiant de chaque objet voisin et associer chaque identifiant lu à une position relative dudit objet voisin par rapport audit premier objet (notamment par l'association des numéros d'ordre des objets communicants 105 mis en relation pour la propagation du signal). On comprend alors qu'à la fin de la propagation du signal, chaque objet de l'ensemble connaît son ou ses objets voisins, et est capable de le(s) localiser par rapport à lui-même.

Dans le cas où l'objet peut comporter plusieurs faces chacune destinée à être en regard d'un objet voisin associé et munie d'un élément communicant, la liste d'un premier objet évoquée ci-dessus peut comporter au moins un, ou une pluralité, d'enregistrements comprenant les données suivantes : identifiant d'un objet voisin, numéro d'ordre de la face du premier objet, numéro d'ordre de la face de l'objet voisin correspondant à la mise en relation du premier objet avec l'objet voisin. Généralement, pour chaque premier objet, la pluralité d'enregistrements comporte autant d'enregistrement(s) que le premier objet comporte d'objet(s) voisin(s).

Chaque objet de l'ensemble, une fois qu'il a construit sa liste, peut la transmettre à un élément de gestion extérieur de l'ensemble d'objets, notamment en utilisant une de ses liaisons sans fil additionnelle. Alternativement, la liste de chaque objet est transmise à l'objet initial en vue d'être récupérée par l'élément de gestion extérieur. La liste d'inventaire du voisinage d'un objet est transmise accompagnée de l'identifiant dudit objet.

Préférentiellement, l'étape de génération de l'inventaire E3 comporte une étape d'enrichissement de l'inventaire dans laquelle un deuxième objet voisin du premier objet transmet sa liste, comprenant des informations relatives à chaque objet voisin, audit premier objet, lesdits premier et deuxième objets étant voisins, ledit premier objet enrichissant l'inventaire en incluant sa propre liste d'objets voisins associée à son propre identifiant et la liste d'objets voisins issue du deuxième objet associée à l'identifiant dudit deuxième objet.

Alternativement, l'étape de génération E3 de l'inventaire comporte une étape d'enrichissement de l'inventaire dans laquelle le premier objet transmet sa liste à un deuxième objet, le deuxième objet étant celui qui lui a transmis ledit signal. On peut prévoir que le premier objet transmette sa liste uniquement au deuxième objet si celui-ci est le premier à lui avoir envoyé le signal, alternativement le premier objet peut transmettre sa liste à tous les objets qui lui ont transmis le signal. En outre, avantageusement lorsque le deuxième objet, qui n'est pas l'objet initial, reçoit une liste d'inventaire du premier objet (la liste d'inventaire du premier objet ou la liste d'inventaire d'un autre objet ou une liste d'inventaire enrichie), il la transmet à un troisième objet qui lui a transmis ledit signal. On peut prévoir que le deuxième objet n'envoie sa liste qu'au troisième objet (le premier à lui avoir transmis le signal), ou à tous les objets lui ayant transmis le signal. On comprend que dans cet exemple, chaque liste va finalement, selon un chemin inverse à la propagation, remonter jusqu'à l'objet initial. L'objet initial étant à la périphérie extérieure de l'ensemble d'objet, l'ensemble de listes pourra être récupéré facilement pour analyse.

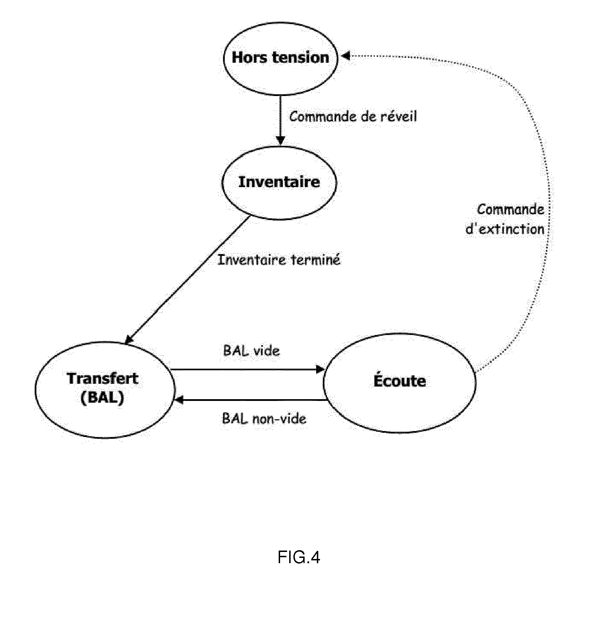

D'une manière alternative, il est possible de décrire le procédé de gestion en utilisant un diagramme d'états et de transition applicable à chaque objet de l'ensemble. Ce diagramme est illustré à la figure 4 et comporte les états suivants : « hors tension », « inventaire », « transfert », « écoute ».

L'état « hors tension » est assimilé à l'état passif décrit ci-dessus. Dans cet état, l'objet associé est hors tension et seules les radio-étiquettes peuvent être télé-alimentées.

L'objet communicant passe dans l'état "Inventaire" après réception d'une commande de réveil par une radio-étiquette. Cette commande de réveil correspond au signal propagé décrit ci-dessus. Dans cet état, l'objet propage cette commande de réveil aux objets voisins préférentiellement uniquement à ceux en état "Hors tension", et fait l'inventaire de son voisinage. Deux blocs d'informations sont établis : un bloc d'usage local contenant en particulier les informations relatives au point d'entrée de la commande de réveil (le numéro de l'élément communicant correspondant, ...) et une liste d'informations relatives au voisinage (les identifiants des objets voisins si présents en association avec les numéros d'éléments communicants en « vis-à-vis », ou l'information d'absence d'objet en association avec le numéro d'élément communicant concerné). Lorsque la liste d'informations relatives au voisinage est établie, ce bloc d'information, étiqueté de l'identifiant de l'objet, est placé dans une "boite à lettres" (BAL) et l'objet passe à l'état "Transfert".

Dans l'état « Transfert », l'objet reçoit le contenu d'une BAL d'un objet voisin (associé à un élément communicant différent de celui ayant reçu la commande de réveil), il l'ajoute au contenu de sa BAL, ou transmet le contenu de sa BAL à l'objet voisin correspondant à l'élément communicant ayant reçu la commande de réveil. Lorsque sa BAL est vide, l'objet passe à l'état "Ecoute".

Dans l'état « Ecoute », l'objet est apte à recevoir le contenu d'une BAL d'un objet voisin (associé à un élément communicant différent de celui ayant reçu la commande de réveil) et l'ajoute au contenu de sa BAL (initialement vide), l'objet passe alors à l'état "Transfert". Dans cet état « écoute », l'objet peut aussi recevoir une commande provenant de l'élément communicant ayant reçu la commande de réveil, par exemple une commande d'extinction qui provoque la mise hors tension de l'objet. Par exemple la commande d'extinction est envoyée à partir de l'objet initial une fois que le contenu de la BAL de chaque objet a atteint l'objet initial.

Lorsque tous les objets sont dans l'état Ecoute, et si le lecteur externe ne reçoit plus de contenu de BAL il peut être décidé que, après un temps d'attente convenu, tous les objets 101 de l'ensemble 100 ont transmis leur liste d'inventaire.

Selon un mode d'exécution de l'invention, le procédé comporte une étape d'utilisation E4 (figure 1) des données de l'inventaire de voisinage pour générer une cartographie de l'agencement spatial des objets 101 de l'ensemble 100 les uns par rapport aux autres. Cette cartographie peut avantageusement être utilisée pour retrouver un objet 101 facilement dans l'ensemble 100 d'objets. L'utilisation des listes décrites ci-dessus permet de reconstruire les positions relatives de chacun des objets 101 par rapport à tous les autres.

Selon un perfectionnement, le procédé comporte une étape de génération E5 (figure 1), pour chaque objet 101 de l'ensemble 100, d'un chemin de communication entre l'objet initial et ledit objet utilisant les capacités de communication dudit objet initial et /ou d'au moins un objet intermédiaire situé (voire de plusieurs objets intermédiaires) sur ledit chemin de communication.

Ce chemin de communication peut avantageusement être déterminé à partir de la cartographie générée. Par exemple, le chemin de communication peut être tel qu'il permet d'accéder à un objet choisi à partir d'un objet initial en ne passant que par un nombre minimal d'objet(s) intermédiaire(s) de sorte à limiter la consommation électrique des objets 101 de l'ensemble 100. Préférentiellement, la route optimale du chemin de communication est élaborée par le lecteur externe qui dispose de la répartition globale des objets les uns par rapport aux autres. Grâce à la proximité des objets adjacents, les liaisons radio entre objets sont effectuées à très faible puissance, ce qui permet de réduire la consommation et en conséquence de prolonger la durée d'utilisation. De plus toutes les liaisons peuvent être opérées simultanément ce qui assure un débit de données optimal.

On comprend de ce qui a été dit ci-dessus qu'une fois la cartographie et les chemins de communication connus, il est plus simple d'interroger un objet en particulier. Autrement dit, le procédé peut comporter une étape d'interrogation E6 (figure 1) d'un objet 101 choisi parmi l'ensemble d'objets 100, l'étape d'interrogation E6 comprenant : une étape d'émission d'une requête d'interrogation à partir de l'objet initial, ladite requête émise se propageant sur le chemin de communication correspondant jusqu'à atteindre l'objet choisi, et une étape de réponse à la requête, ladite réponse étant émise par l'objet choisi et se propageant sur le chemin de communication correspondant jusqu'à l'objet initial.

En fait, la requête peut comporter l'identifiant de l'objet choisi ainsi que les identifiants de chaque objet intermédiaire par lequel doit transiter la requête avant d'arriver à l'objet choisi. Ainsi, si on veut communiquer avec un objet choisi de l'ensemble alors que tous les objets sont dans un état passif, on réveille un objet initial (qui peut être le même ou différent de celui utilisé dans l'étape de propagation décrite ci-avant), ensuite la requête est transmise de telle sorte que seul(s) le, ou les, objets intermédiaires passent de l'état passif à l'état actif jusqu'au réveil de l'objet choisi.

Chaque objet 101 de l'ensemble 100 peut comporter un contenant muni d'un contenu et peut fournir des données représentatives du contenu. Cette étape de récupération des données peut être mise en oeuvre par l'étape d'interrogation E6 décrite ci-dessus.

En plus de données représentatives du contenu, on peut également prévoir le transfert, vers l'objet initial, de données collectées au niveau de chacun des objets, par exemple issues de capteurs intégrés dans ces objets (par exemple pour obtenir des informations sur l'historique du stockage à l'aide de capteurs de chocs...)

On comprend alors que chaque objet peut comporter un contenant formé par exemple par une caisse. La caisse peut être métallique et dans ce cas le procédé tel que décrit permet de s'affranchir des difficultés de propagation dues au métal des caisses.

Les caisses peuvent contenir tout type de contenu, comme des denrées, des dispositifs tiers à stocker, etc.

Dès lors, le procédé décrit ci-avant peut être utilisé dans le cadre de stockage de tout type d'objet.

En ce sens, l'invention est aussi relative à une installation de stockage comprenant un ensemble d'objets communicants répartis de telle sorte que chaque objet de l'ensemble d'objets est voisin d'au moins un autre objet dudit ensemble de sorte à former une paire d'objets voisins aptes à communiquer entre eux, ladite installation comprend des éléments configurés de sorte à mettre en oeuvre le procédé tel que décrit précédemment. Notamment, chaque élément de l'installation peut être configuré de sorte à réaliser une étape correspondante associée telle que décrite ci-avant.

L'objet communicant décrit ci-avant peut être destiné à être stocké dans l'installation telle que décrite.

## Revendications

1. Procédé de gestion d'un ensemble (100) d'objets communicants (101) répartis de telle sorte que chaque objet (101) de l'ensemble (100) est voisin d'au moins un autre objet (101) dudit ensemble (100) de sorte à former une paire d'objets voisins aptes à communiquer entre eux, ledit procédé comportant les étapes suivantes:
- une activation (E1) d'un objet initial (101 a) choisi parmi les objets (101) de l'ensemble (100),
- une propagation (E2), à partir de l'objet initial (101 a) activé, d'un signal à chacun des autres objets de l'ensemble configurée de telle sorte que chacun desdits autres objets de l'ensemble a reçu, au terme de l'étape de propagation (E2), au moins une fois ledit signal de la part d'au moins un objet voisin appartenant audit ensemble,
**caractérisé en ce que** le signal propagé est une consigne de réveil et **en ce que** chacun des objets (101) de l'ensemble (100) étant dans un état passif, le passage de l'état passif à un état actif de l'objet initial (101 a) est réalisé par l'étape d'activation (E1) provoquant l'alimentation électrique d'au moins un lecteur (102a) de l'objet initial (101 a) et l'émission d'un champ électromagnétique par ledit au moins un lecteur (102a) en vue de transmettre la consigne de réveil à un objet voisin correspondant, et **en ce que** le passage de l'état passif à un état actif de chacun des autres objets (101) de l'ensemble (100) est réalisé par une étape d'alimentation électrique d'une radio-étiquette dudit objet à l'état passif provoquée par un champ électromagnétique émis par un lecteur d'un objet voisin à l'état actif, ladite alimentation électrique de la radio-étiquette dudit objet à l'état passif provoquant :
- la création d'un lien de communication entre ledit lecteur de l'objet voisin à l'état actif et ladite radio-étiquette dudit objet à l'état passif,
- la transmission, via le lien de communication créé, de la consigne de réveil par ledit lecteur de l'objet voisin à l'état actif,
- la réception par ladite radio-étiquette dudit objet à l'état passif de ladite consigne de réveil provoquant la mise en oeuvre d'une étape d'alimentation électrique d'au moins un lecteur dudit objet à l'état passif, son passage à l'état actif, et l'émission par ledit au moins un lecteur alimenté d'un champ électromagnétique en vue de transmettre ladite consigne de réveil.

2. Procédé selon la revendication précédente, **caractérisé en ce que** l'ensemble d'objets (100) est configuré de sorte à adopter une configuration de veille où tous les objets (101) de l'ensemble (100) sont dans l'état passif et une configuration de réveil où tous les objets (101) de l'ensemble (100) sont dans l'état actif, le passage de la configuration de veille à la configuration de réveil étant mis en oeuvre par l'étape de propagation (E2), ledit signal propagé étant alors la consigne de réveil.

3. Procédé selon la revendication 1 ou la revendication 2, **caractérisé en ce que** lorsque ladite radio-étiquette dudit objet à l'état passif reçoit ladite consigne de réveil, ladite radio-étiquette authentifie la consigne de réveil en vue de vérifier qu'il s'agit bien d'une consigne de réveil autorisée, si la consigne de réveil est authentifiée, alors il est provoqué la mise en oeuvre de l'étape d'alimentation électrique d'au moins un lecteur dudit objet à l'état passif, son passage à l'état actif, et l'émission par ledit au moins un lecteur alimenté d'un champ électromagnétique en vue de transmettre ladite consigne de réveil.

4. Procédé selon l'une des revendications précédentes, **caractérisé en ce que** chaque objet (101) de l'ensemble (100) comporte une pluralité d'éléments communicants (105), chaque paire (106) d'objets voisins comportant deux objets (101g, 101f) capables de communiquer directement entre eux uniquement par l'intermédiaire d'un seul élément communicant (105a) de l'un des objets (101 g) de la paire d'objets voisins et d'un seul élément communicant (105b) de l'autre des objets (101 f) de la paire d'objets voisins, et **en ce que** l'étape de propagation (E2) dudit signal comporte une étape de communication directe du signal entre lesdits deux objets (101g, 101f) d'une même paire d'objets voisins (106).

5. Procédé selon les revendications 1 et 4, **caractérisé en ce que** chaque élément communicant (105) comporte un lecteur (102) et une radio-étiquette (104), l'étape d'alimentation électrique d'une radio-étiquette (104) de l'un des éléments communicants (105) d'un objet par un objet voisin provoquant, en cas de réception de la consigne de réveil par ladite radioétiquette alimentée, la mise en oeuvre de l'alimentation électrique de chacun des lecteurs (102) des autres éléments communicants (105) dudit objet.

6. Procédé selon l'une quelconque des revendications précédentes, **caractérisé en ce qu'**il comporte une étape de génération (E3) d'un inventaire de voisinage (E3) des objets (101) de l'ensemble (100) à partir de données générées par chacun des objets de l'ensemble après réception dudit signal, ledit inventaire comportant pour chaque objet de l'ensemble une liste comprenant des informations relatives à chaque objet voisin dudit objet.

7. Procédé selon la revendication précédente **caractérisé en ce qu'**il comporte une étape d'utilisation (E4) des données de l'inventaire de voisinage pour générer une cartographie de l'agencement spatial des objets (101) de l'ensemble (100) les uns par rapport aux autres.

8. Procédé selon la revendication précédente, **caractérisé en ce qu'**il comporte une étape de génération (E5), pour chaque objet (101) de l'ensemble (100), d'un chemin de communication entre l'objet initial et ledit objet utilisant les capacités de communication dudit objet initial et/ou d'au moins un objet intermédiaire situé sur ledit chemin de communication.

9. Procédé selon la revendication précédente, **caractérisé en ce qu'**il comporte une étape d'interrogation (E6) d'un objet (101) choisi parmi l'ensemble (100), l'étape d'interrogation comprenant les étapes suivantes :
- une émission d'une requête d'interrogation à partir de l'objet initial, ladite requête émise se propageant sur le chemin de communication correspondant jusqu'à atteindre l'objet choisi,
- une réponse à la requête, ladite réponse étant émise par l'objet choisi et se propageant sur le chemin de communication correspondant jusqu'à l'objet initial.

10. Procédé selon l'une des revendications 6 à 9, **caractérisé en ce que** l'étape de génération de l'inventaire (E3) comporte l'établissement par un premier objet de l'ensemble, notamment après avoir propagé le signal à chaque objet voisin, d'une liste comprenant des informations relatives à chaque objet voisin dudit premier objet.

11. Procédé selon la revendication précédente, **caractérisé en ce que** l'étape de génération de l'inventaire (E3) comporte une étape d'enrichissement de l'inventaire dans laquelle un deuxième objet transmet sa liste, comprenant des informations relatives à chaque objet voisin, audit premier objet, lesdits premier et deuxième objets étant voisins, ledit premier objet enrichissant l'inventaire en incluant sa propre liste d'objet voisins associée à son propre identifiant et la liste issue du deuxième objet associée à l'identifiant dudit deuxième objet.

12. Procédé selon la revendication 10, **caractérisé en ce que** l'étape de génération de l'inventaire (E3) comporte une étape d'enrichissement de l'inventaire dans laquelle le premier objet transmet sa liste à un deuxième objet, le deuxième objet étant celui qui lui a transmis ledit signal.

13. Installation de stockage comprenant un ensemble d'objets communicants répartis de telle sorte que chaque objet de l'ensemble d'objets est voisin d'au moins un autre objet dudit ensemble de sorte à former une paire d'objets voisins aptes à communiquer entre eux, ladite installation comprenant des éléments configurés de sorte à mettre en oeuvre le procédé selon l'une quelconque des revendications 1 à 12.

14. Objet communicant destiné à être stocké dans l'installation selon la revendication 13, **caractérisé en ce qu'**il comporte une pluralité d'éléments communicants (105) disposés chacun sur des faces différentes de l'objet communicant (101), et **en ce que** chaque élément communicant (105) est configuré de sorte à recevoir un signal et à le transmettre aux autres éléments communicants (105), lesdits autres éléments communicants (105) étant configurés de sorte à propager, après réception dudit signal transmis, ledit signal reçu vers l'extérieur dudit objet communicant (101).

15. Objet selon la revendication précédente, **caractérisé en ce que** chaque élément communicant (105) comporte :
- un lecteur (102) configuré de sorte à émettre un champ électromagnétique permettant l'alimentation sans fil d'une radio-étiquette d'un autre objet communicant et,
- une radio-étiquette (104) configurée de sorte à être alimentée par un champ électromagnétique émis par un lecteur d'un autre objet communicant.
